# EUROPÄISCHE PATENTANMELDUNG

(11) **EP 1 513 084 A1**
(43) Veröffentlichungstag der Anmeldung: **09.03.2005**
(21) Anmeldenummer: 03405636.6
(22) Anmeldetag: 02.09.2003
(51) Int. Cl.: G06F 17/60, G06F 15/02

(54) **Verfahren zur zeitlichen Akzeptanz von Einrichtungen, eine hierzu verwendbare Anordnung sowie Gerätschaften**

(71) Anmelder: LIECHTI AG, CH-4566 Kriegstetten (CH)
(72) Erfinder:
(74) Vertreter: Roshardt, Werner Alfred, Dipl.-Phys.

(57) **Zusammenfassung**

Eine Anordnung zur Ermittlung einer zeitlichen Akzeptanz von örtlich voneinander distanzierten Einrichtungen **(1a-c)** hat wenigstens eine an jeder Einrichtung **(1a-c)** angeordnete Sendereinheit **(3a-c),** von der ein elektromagnetisches, diese Einrichtung **(1a-c)** identifizierendes Identifizierungssignal **(5a-c)** mit einer vorgegebenen Reichweite **(17a-c)** aussendbar ist. Es sind mehrere von jeweils einer Person **(6a-c)** zu tragende Personengeräte **(7a-d)** mit einem Empfänger **(4a-d)** für die Signale und mit einem Gerätespeicher, um über einen vorgegebenen Zeitraum Dateninhalte der abgestrahlten Signale (**5a-c**) abzuspeichern, vorhanden. Die Reichweite jeder Sendeeinheit (**3a-c**) definiert einen jeweiligen Sendebereich **(9a-c).** Der Sendebereich **(9a-c)** und eine Empfangsempfindlichkeit des Empfängers **(4a-d)** sind derart aufeinander abgestimmt, dass kein Datenempfang möglich ist, sofern sich die Einrichtung **(1a-c)** bezogen auf das von der Person (**6a-c**) getragene Personengerät (**7a-d**) ausserhalb eines typischen menschlichen Aufmerksamkeits- bzw. Empfindungsbereichs befindet.

## Beschreibung

### Technisches Gebiet

Die Erfindung betrifft ein Verfahren zur Ermittlung einer zeitlichen Akzeptanz von Einrichtungen gemäss Patentanspruch 1, eine Anordnung zur Durchführung des Verfahrens gemäss Patentanspruch 7, ein Personengerät gemäss Patentanspruch 10 sowie eine Sendereinheit der Anordnung gemäss Patentanspruch 14.

### Stand der Technik

Unter einer zeitlichen Akzeptanz wird verstanden, wie Einrichtungen beim Betrachten bzw. bei einem Benützer ankommen. Wirken sie überhaupt auf ihn, können sie ihn zum Kauf oder zur Benützung, zur Betrachtung anregen bzw. auffordern.

Das Kaufverhalten z.B. versuchte man dadurch zu ermitteln, dass Kundenkarten ausgegeben wurden, welche bei einem Einkauf an der Kasse vorzuzeigen waren. Die eingekauften Waren wurden dann den Daten des Karteninhabers zugeordnet und in einem zentralen Rechner verarbeitet und abgespeichert. Hieraus sollten die Kaufgewohnheiten ermittelt werden. Man wollte hiermit z.B. eine Sortimentsoptimierung erreichen und/oder der betreffenden Person z.B. gezielt Reklame zukommen lassen. Ein einigermassen exaktes Kaufprofil liess sich jedoch nur bedingt erstellen, sofern auch immer die Kundenkarte präsentiert wurde.

### Darstellung der Erfindung

### Aufgabe

Aufgabe der Erfindung ist es, ein Verfahren sowie hierzu verwendbare Gerätschaften zu schaffen, welche es gestatten, eine Akzeptanz von Einrichtungen und somit deren Wirkung auf unbeteiligte sowie mit ihnen sich beschäftigenden, eventuell sie benützenden Personen zu ermitteln.

### Lösung

Die Lösung der Aufgabe erfolgt verfahrensmässig durch die Merkmale des Patentanspruchs 1. Vorrichtungsmässig wird die Aufgabe durch die in Patentanspruch 7 definierte Anordnung gelöst, welche u.a. ein in Patentanspruch 10 definiertes Personengerät und eine in Patentanspruch 14 definierte Sendereinheit hat.

Erfindungsgemäss wird die zeitliche Akzeptanz von auf Personen wirkenden Einrichtungen dadurch gelöst, dass von jeder dieser Einrichtungen ein elektromagnetisches Identifizierungssignal mit einer vorgegebenen Reichweite ausgesandt wird. Der momentane Dateninhalt wird von einem von einer Person getragenen Personengerät empfangen, sofern sich die Person innerhalb eines durch die jeweilige Reichweite definierten Sendebereichs befindet. Der Dateninhalt wird ferner in einem Gerätespeicher des Personengeräts abgespeichert. Der Sendebereich und eine Empfangsempfindlichkeit des Personengeräts sind derart aufeinander abgestimmt, dass kein Datenempfang möglich ist, sofern sich die Einrichtung bezogen auf das von der Person getragene Personengerät ausserhalb eines typischen menschlichen Aufmerksamkeits- bzw. Empfindungsbereichs befindet.

Unter einem menschlichen Aufmerksamkeits- bzw. Empfindungsbereich einer Einrichtung wird der Bereich verstanden, in dem sich eine Person befinden kann, um die typischen Eigenheiten einer Einrichtung aufzunehmen, zu erkennen, Teile der Einrichtung zu verwenden bzw. zu bearbeiten. Einige nachfolgende Beispiel sollen diesen Begriff verdeutlichen. Der Aufmerksamkeits- bzw. Empfindungsbereich eines Schaufensters ist beispielsweise die Sichtweite, in der ausgestellte Gegenstände und deren Kennzeichnungen (z.B. Preisschilder) noch erkennbar sind. In der Regel ist hier ein Abstand von ein bis drei Metern von der Schaufensterscheibe gemeint. Handelt es sich um eine Anzeige an einer Litfasssäule wird man von einer Distanz von ein bis zwei Metern ausgehen. Sollen die Benutzungsgewohnheiten in öffentlichen Verkehrsmitteln festgestellt werden, ist der Aufmerksamkeits- bzw. Empfindungsbereich auf das Fahrzeuginnere beschränkt. Wird ein Automat betätigt, so wird dessen Berührung gefordert. Es können aber auch grössere Reichweiten von etwa 25 Meter für Fussgänger und von etwa 50 Meter für sich in Fahrzeugen bewegende Personen gewählt werden.

Eine Akzeptanzermittlung unter Mitwirkung von Person kann in deren Privatsphäre eingreifen, welche zu schützen ist. Die abgespeicherten Daten müssen für eine nachfolgende Auswertung auslesbar sein. Damit sie jedoch nicht von jedermann interpretierbar sind, wird man sie chiffrieren. Eine einfache Art der Chiffrierung, welche zudem auch noch Speicherplatz einspart, ergibt sich dadurch, dass die Signale aus einem räumlichen Überwachungsbereich der mehrere Einrichtungen enthält, während eines vorgegebenen Zeitraums in einer Zentrale als Zeitraumeinrichtungssignale abgespeichert werden. Die in jedem Gerätespeicher des Personengeräts über den Zeitraum gespeicherten Dateninhalte der Momentansignale werden später zur Zentrale übertragen und zur Koinzidenzbildung mit den dort gespeicherten Zeitraumsignalen ausgelesen. Die ermittelten Koinzidenzen können anschliessend verarbeitet werden. Weitere Arten der Verschlüsselung sind in der Detailbeschreibung angeführt.

Um Fehlinterpretationen zu vermeiden, können auch Umgebungsinformationen mit aufgezeichnet werden. Als Umgebungsinformationen können Geräusche, Lichtstärken, Umgebungstempeaturen etc. dienen.

Es könnten nun lediglich die von der jeweiligen Einrichtung ausgesandten Dateninhalte deren Identifizierungssignale abgespeichert werden. Die jeweilige Einrichtung kann jedoch neben ihrem Identifizierungssignal auch noch einen Fragenkatalog mit ein oder mehreren Fragen aussenden, die dann über Eingabemittel am Personengerät beantwortet werden.

Es können jedoch auch Eingabemittel vorhanden sein, welche zusätzliche Signale empfangen. Zusätzliche Signale können Umgebungssignale sein, es könnte aber auch noch ein zweites Signal oder mehrere Signale sein, welche neben dem Dateninhalt des Identifizierungssignals empfangen werden. Ausführungsbeispiele hierzu finden sich in der Detailbeschreibung. Der Fragenkatalog kann auch m Personengerät abgelegt sein.

Jede Einrichtung kann nun von sich aus Signale aussenden. Das Personengerät kann jedoch auch eine Einrichtung initiieren, um Signale auszusenden. Ein derartiges Verfahren wird man hauptsächlich dann anwenden, wenn bei der Einrichtung Energie gespart werden soll. In der Regel wäre es vorteilhafter, wenn das Personengerät einen Initiierungsimpuls aussenden würde; viele Personen haben jedoch eine Abneigung, ein Personengerät zu tragen, welches öfter elektromagnetische Strahlung abstrahlt.

Eine Durchführung einer Akzeptanzbestimmung von voneinander distanzierten Einrichtungen in einem Überwachungsbereich, der ein Stadtviertel, ein Dorf oder eine ganze Stadt sein kann, wird erfindungsgemäss mit einer Anordnung erreicht, welche im Überwachungsbereich mehrere Einrichtungen mit Sendereinheiten hat und mehrere Personen je ein Personengerät mit Gerätespeicher zur Datenabspeicherung tragen. Die Sendereinheiten und die Personengeräte weisen die bereits oben angetönten Eigenschaften auf.

Eine Anordnung bestehend aus mehreren Personengeräten und wenigstens einem Sender an jeder der Einrichtungen ist betriebsbereit. Die Sender sind derart ausgebildet, dass sie ein die betreffende Einrichtung kennzeichnendes Signal aussenden, welches sich auch zeitlich ändern kann. Vorzugsweise wird man jedoch in einer Anordnung noch eine zusätzliche Zentrale verwenden. Diese Zentrale hat einen Zentralenspeicher, in dem die Datensätze der von den Einrichtungen abgestrahlten Signale bzw. deren Dateninhalt über einen vorgegebenen Zeitraum abspeicherbar sind. Ferner hat die Zentrale einer Leseeinheit, mit der der Gerätespeicher auslesbar ist, sowie eine Korrelationseinheit, mit der die ausgelesenen Datensignale des Gerätespeichers mit den Datensätzen des Zentralenspeichers in einer Koinzidenzroutine ermittel- und auswertbar sind. Die Verwendung einer Zentrale ermöglicht eine Datenkomprimierung und damit eine Sicherheit gegen unbefugtes Auslesen des im Personengerät abgespeicherten Dateninhalts. Es ist eine Verschlüsselung (Chiffrierung) der Dateninhalte möglich.

Es kann nun eine Zentrale vorhanden sein, welche eine Reihe von Personengeräten auswertet. Die betreffenden Personengeräte werden dann zum Auslesen zur Zentrale gebracht. Es können, aber auch mehrere stationäre Zentralen vorhanden sein, z.B. in jedem Haushalt, der wenigstens eine Person hat, die ein Personengerät trägt. Diese "Hausstation" ("Dockingstation") kann dann beispielsweise die Daten aus dem Personengerät auslesen und z.B. über das Telefonnetz an eine zentrale Einheit übermitteln.

Die Sender bzw. die derart ausgewählten Einrichtungen befinden sich an unterschiedlichen Orten eines Überwachungsbereiches. Werden Personengruppen nach besonderen Eigenschaften ausgewählt oder soll nur eine Akzeptanz über einen Bevölkerungsquerschnitt festgestellt werden, kann aus den in den Personengeräten abgespeicherten Daten ermittelt werden, wie oft und wie lange bestimmte Einrichtungen aufgesucht, betrachtet oder benützt worden sind. Man hat hiermit ein Mittel in der Hand um festzustellen, wie u.a. Werbung ankommt, wie häufig und zwischen welchen Haltestellen öffentliche Verkehrsmittel benützt werden; auch lässt sich beispielsweise feststellen, was als Blickfang in Schaufenstern oder bei Plakatwänden wirkt.

Das Personengerät trägt die jeweilige Person. Vorzugsweise wird man das Gerät, damit es nicht allzu sehr auffällt, und der Person auch noch Nutzen bringt, als Armbanduhr ausbilden. Trägt nun die betreffende Person statt einem einzigen Personengerät an jedem Arm ein Personengerät, kann aufgrund von Interferenzmessungen festgestellt werden, wie die Person zur Einrichtung steht. Steht sie z.B. mit dem Rücken hierzu, ist wohl ein visueller Reiz bzw. eine Werbungsaufnahme auszuschliessen.

Werden die Daten mit einer bestimmten Taktzeit aufgenommen, ist eine Datenkomprimierung möglich. Es gibt nun unterschiedlich lange Beobachtungs- oder Verweilzeiten. Vor einem Schaufenster zum Beispiel dürfte eine Verweilzeit von einer Minute schon lang sein. In einem Omnibus ist die Aufenthaltsdauer schon bedeutend länger, in einem Kino oder einem Restaurant noch länger. Um nun eine vernünftige Angabe über eine auf eine Person einwirkende Einrichtung zu ermitteln, kann die zum Abspeichern verwendete Taktzeit variabel gestaltet werden. Einrichtungen, welche eine kurze "Einwirkungszeit" benötigen, sollten somit eine höhere Taktfrequenz (kürzere Zeit zwischen den einzelnen Messungen) erzwingen; aufenthaltsspezifische Einrichtungen dann eine tiefere Taktfrequenz (eine längere Zeit zwischen den Messungen). Mit dem vom Sender der Einrichtung abgestrahlten Signal kann somit ein Code für eine entsprechende Taktzeit ausgesandt werden, der dann den Taktgeber im Personengerät entsprechend umschaltet.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung der Ausführungsbeispiele verwendeten Zeichnungen zeigen
- Fig. 1: eine schematische Darstellung einer Ausführungsvariante einer Anordnung zur zeitlichen Verhaltensermittlung von Personen,
- Fig. 2: eine schematische Darstellung des Zusammenhangs von Aufmerksamkeits-bzw. Empfindungsbereich, Sendebereich und Empfangsbereich und
- Fig. 3: ein Ausführungsbeispiel eines Personengeräts.

Grundsätzlich sind in den Figuren gleiche Teile und Elemente mit gleichen Bezugszeichen versehen.

### Wege zur Ausführung der Erfindung

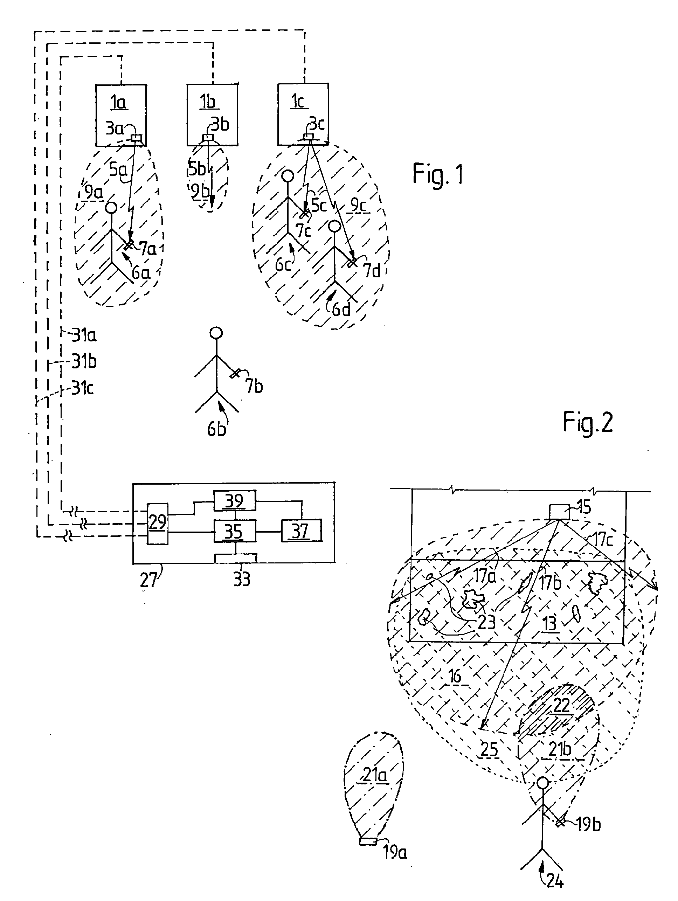

Das in **Figur 1** dargestellte Ausführungsbeispiel einer erfindungsgemässen Anordnung dient zur Ermittlung einer zeitlichen Akzeptanz von örtlich voneinander distanzierten Einrichtungen **1a** bis **1c**. Einrichtungen können Schaufenster, Plakate, Kinos, Geschäfte, Museen, Strassenbahn- und Busstationen usw. sein. Wobei deren Akzeptanz bei der Bevölkerung ermittelt werden soll.

Unter einer Akzeptanz wird z.B. verstanden, welche Bevölkerungsschichten sehen sich welche Schaufenster mit welchem Inhalt an. Welche Bevölkerungsschichten gehen wann ins Kino und sehen sich welche Filme an. Welche Museen werden besucht und was wird angesehen. Welche Busse, Strassenbahnen werden von wo bis wo und wann benützt.

An jeder Einheit **1a** bis **1c**, deren Akzeptanz ermittelt werden soll, ist wenigstens eine Sendereinheit **3a** bis **3c** angeordnet. Von der Sendereinheit **3a** bis **3c** wird ein elektromagnetisches, diese Einrichtung identifizierendes Identifizierungssignal **5a** bis **5c** mit einer vorgegebenen, in der Regel kurzen Reichweite ausgesendet. Jedes dieser Identifizierungssignale **5a** bis **5c** kann von einem Empfänger **4a** bis **4d** eines von einer Person **6a** bis **6d** zu tragenden Personengeräts **7a** bis **7d** empfangen werden, sofern sich die Person bzw. deren Personengerät im Sendebereich **9a**, **9b** bzw. **9c** einer der Sendereinheiten **3a** bis **3c** befindet. In **Figur 1** befindet sich die Person **6a** mit ihrem Personengerät **7a** im Sendebereich **9a** und die beiden Personen **6c** und **6d** mit ihren Personengeräten **7c** bzw. **7d** im Sendebereich **9c**. Die Person **6b** mit ihrem Personengerät **7b** befindet sich in keinem Sendebereich.

Die Reichweite jeder Sendereinheit sowie die Empfindlichkeit der jeweiligen Empfänger der Personengeräte sind aufeinander derart abgestimmt, dass kein Datenempfang möglich ist, sofern sich die Einrichtung bezogen auf das von der Person getragene Personengerät ausserhalb eines typischen menschlichen Aufmerksamkeits- bzw. Empfindungsbereichs befindet. Dieser Sachverhalt ist in **Figur 2** erläutert. In **Figur 2** ist schematisch als Einrichtung ein Schaufenster **13** analog zu den Einrichtungen **1a** bis **1d** dargestellt. Hinter dem Schaufenster **13** ist eine zu den Sendereinheiten **3a** bis **3c** analog ausgebildete Sendereinheit **15** angeordnet. Die Sendereinheit **15** strahlt elektromagnetische Identifizierungssignale in einen keulenartigen, zu den Sendebereichen **9a** bis **9c** analogen Sendebereich **16** ab. Im Sendebereich 16 sind somit die Reichweiten **17a** bis **17c** je nach Ausstrahlungsrichtung unterschiedlich. Jeder zu den Empfängern analog ausgebildete Empfänger **19a** und **19b** hat nun einen durch seine Empfindlichkeit definierten räumliche Empfangsbereich, wobei ein Empfang von Identifizierungssignalen immer dann gegeben ist, wenn Empfangs- und Sendebereich eine gemeinsame Fläche, hier die Überlappungsfläche **22,** einschliessen. In **Figur 2** sind die beiden Empfangsbereiche **21 a** und **21 b** der beiden Empfänger **19a** und **19b** dargestellt.

Um beispielsweise in einem Schaufenster **13** die Auslagen **23** erkennen und beurteilen zu können, muss die betrachtende Person, hier die Person **24**, so nahe herantreten, dass dies auch möglich ist. Der Bereich, in dem die Person bei dieser Entfernung alles erkennen und beurteilen kann, wird als menschlicher Aufmerksamkeits- bzw. Empfindungsbereich definiert. Der Sendebereich **16** und die Empfangsempfindlichkeit **21b** werden nun derart aufeinander abgestimmt, dass das zu betrachtende Gut, hier die Auslagen **23**, innerhalb des Aufmerksamkeits- bzw. Empfindungsbereichs **25** liegen. Der Sendebereich **16**, wie unten ausgeführt muss nicht unbedingt von der jeweiligen Einrichtung ausgehen. Die Einrichtung kann auch Empfänger sein. Analoges gilt für die Empfangsempfindlichkeit.

Der Bereich **25** ist individuell verschieden. Man kann aber davon ausgehen, dass kurzsichtige Person sowie auch weitsichtige eine sichtweitekorrigierende Brille tragen werden; man wird deshalb zur Vereinfachung mit einem typischen menschlicher Aufmerksamkeits- bzw. Empfindungsbereich arbeiten. Falls erforderlich, kann jedoch der Empfänger **19a** bzw. **19b** auch individuell auf die Sehschärfe oder falls es sich auf Hörsignale bezieht, auf die individuelle Hörempfindung abgestimmt werden.

Die in einem Gerätespeicher 26 abgespeicherten unterschiedlichen Datensätze von Identifizierungsignalen werden später ausgelesen, um zu erfahren, an was die betreffende Person Interesse hatte. Eine derartige Auswertung über einen repräsentanten Bevölkerungsquerschnitt oder lediglich über sehr viele Personen eines Ortes ergibt Auskunft zu den verschiedensten Fragen, wobei anschliessend nur eine kleine Auswahl aufgelistet ist:
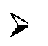 Welche Werbemittel sind die geeignetsten, wo sind sie anzubringen, was ist darzustellen.
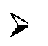 Welche Strassen und Wege werden wie häufig benützt, welche Strassenseiten werden benützt.
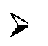 Welche Verbindungen von öffentlichen Verkehrsmitteln werden wann und wie oft benützt.
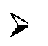 Welche Schaufenster, Geschäfte, Lokale usw. werden wann und wie oft aufgesucht.

Die oben beschriebene Anordnung aus Personengeräten **7a** bis **7d** und Sendern **3a** bis **3c** ist betriebsbereit. Vorzugsweise wird man jedoch der Anlage eine Zentrale **27** mit einem Zentralenspeicher **29** zuordnen, was jedoch keineswegs zwingend ist. Der Zentralenspeicher **29** ist mit den Sendereinheiten **3a** bis **3c** der Einheiten **1a** bis **1c** signalmässig verbunden. Die Verbindung kann über Leitungen **31a** bis **31c** (z.B. Telefonnetz), wie in **Figur 1** gezeigt, erfolgen. Sie kann aber auch funktechnisch erfolgen. Ein Versenden von Datenträgern an die Zentrale **27** ist ebenfalls möglich. Die Zentrale **27** hat ferner eine Leseeinheit **33**, mit der der Gerätespeicher **26** jedes Personengerätes **7a** bis **7d** über eine Schnittstelle **38** auslesbar ist sowie eine Korrelationseinheit **35**, mit der die ausgelesenen Datensignale des Gerätespeichers mit den Datensätzen des Zentralenspeichers **29** in einer Koinzidenzroutine ermittel- und in einer Auswerteeinheit **37** auswertbar sind.

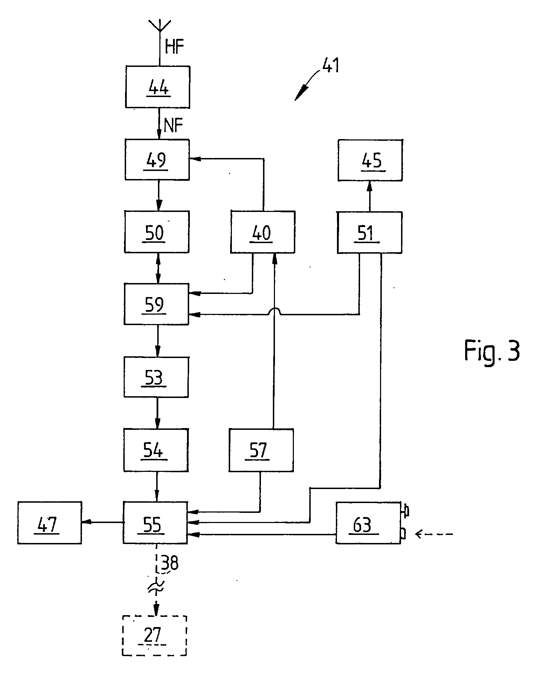

Das Personengerät **41** (**Figur 3**) wird man bevorzugt zur Reduzierung der Datenmenge mit dem Signal eines Taktgebers **40** getaktet betreiben. Aus der Anzahl aufgenommener Signalpakete ist dann ohne weiteres erkennbar, wie lange sich die betreffende Person in einem Sendebereich einer Einrichtung aufgehalten hat. Die Verwendung eines für alle Personengeräte gleichen Taktes erlaubt zudem eine genauere und einfachere Koinzidenzbildung in der Zentrale unter Verwendung eines im gleichen Takt laufenden dortigen Taktgebers **39**.

Es kann jedoch von Vorteil sein, wenn die Taktfrequenz umschaltbar ausgebildet wird. Es gibt nämlich Einrichtungen, welche ihren Zweck erfüllen, wenn sie nur kurzzeitig auf eine sich in ihrem Einflussbereich sich befindende Person einwirken. In diesem Fall wird die betreffende Einrichtung ein Signal aussenden, welches im Personengerät eine Umschaltung des Taktgebers bewirkt. Der Taktgeber schaltet automatisch zurück, wenn der Sendebereich verlassen wird.

Die Anordnung kann nun, wie bisher beschrieben, unabhängig von der Uhrzeit betrieben werden, wobei dann die Signale nur hintereinander abgespeichert werden. Vorzugsweise wird man jedoch ein Zuordnung zur Uhrzeit vornehmen. Die Uhrzeit kann zudem in die Koinzidenzroutine einfliessen. Auch kann es wichtig sein, zu welcher Uhrzeit eine Einrichtung eine starke oder eine schwache Akzeptanz hatte. Soll die Uhrzeit mit einfliessen, wird man vorzugsweise das Personengerät als Armbanduhr **41** ausbilden, die neben der Zeitanzeige die oben erwähnten Funktionen beinhaltet. Eine Antenne **43** eines zu den Empfängern **19a** bzw. **19b** analog ausgebildeten Empfängers **44** kann dann im Uhrengehäuse, wobei dieses dann vorzugsweise, aber nicht zwingend aus einem Kunststoff zu bestehen hat, oder im Armband untergebracht werden. Die Vorderseite der Uhr weist dann eine Zeitanzeige **45** und falls gewünscht eine weitere Anzeige **47** für beispielsweise eine Empfangs- bzw. Aufnahmebereitschaft eines von einer Sendeeinheit **3a** bis **3c** bzw. **15** einer der Einrichtung **1a** bis **1c** ausgesandten Signals auf. Ein aus dem über die Antenne **43** empfangenen, drahtlos übermittelten (HF-) Signal durch den Empfänger **44** erhaltenes niederfrequentes (NF) Identifizierungssignal wird auf einen Analog-Digital-Converter **49** gegeben. Das aufbereitete NF-Signal wird in einen Zwischenspeicher **50** geführt, auf den der bereits oben erwähnte Taktgeber **40** einwirkt. Der Taktgeber **40** ist zur oben erwähnten Umschaltung der Taktfrequenz mit dem Empfänger **44** verbunden. Auch der Analog-Digital-Converter **49** ist mit dem Taktgeber **40** verbunden. Ein Durchschalten des nun digitalisierten NF-Signals wird jeweils nur durch den Taktgeber **40** frei gegeben. Die Freigabezeiten des Taktgebers **40** richten sich nach den zu erkennenden und später in der Zentrale **27** zu verarbeitenden Identifizierungssignalen. Die Freigabezeiten liegen im Sekunden- und Subsekundenbereich. Es können Datenpakete bis hinunter in den Mikrosekundenbereich übermittelt werden. Der Taktgeber **40** ist mit einem Zeitgenerator **51**, in der Regel einem Schwingquarz und dessen dazugehörenden Elektronik, verbunden. Der Zeitgenerator **51** steuert zudem die Zeitanzeige **45**. Die Zeitanzeige kann auf die Bedürfnisse der das Personengerät tragenden Person eingestellt werden. Der Zeitgenerator **51** wird vorzugsweise in der Zentrale auf die sogenannte GPS-Zeit eingestellt und läuft dann quarzgesteuert sehr genau weiter. Die anzuzeigende Zeit kann verstellt werden; es gibt z.B. Personen, welche, um immer pünktlich zu sein, die anzuzeigende Uhrzeit auf 5 oder 10 Minuten "vor der Zeit" einstellen. Da der Taktgeber **40** mit dem Zeitgenerator **51** verbunden ist, kann eine Signalaufnahme der Identifzierungssignale der Einrichtungen immer zu einem vorgegebenen Zeitpunkt erfolgen. Unter Kenntnis dieses vorgegebenen Zeitpunktes lässt sich der Rechenaufwand der Koinzidenzbildung in der Zentrale **27** verkürzen.

In der durch den Taktgeber **40** bestimmten aufnahmefreien Restzeit werden Daten aus dem Zwischenspeicher **50** ausgelesen und in einer mit diesem verbundenen Fourier-Transformationseinheit **53** in ein Frequenzspektrum umgewandelt. Die Daten des Frequenzspektrums werden in einer Datenkompressionseinheit **54** komprimiert (z.B. Huffmann-Kodierung; Lempel-Ziv-Welch-Verfahren, usw.) und in einem von der Zentrale **27** auslesbaren Speicher **55** abgespeichert. Falls als notwendig erachtet, könnte das komprimierte Signal verschlüsselt werden. Die Durchführung einer Fourier-Transformation ist keineswegs zwingend . Es können auch andere Verfahren verwendet werden, wie beispielsweise eine Wavelet-Transformation.

Auf den Analog-Digital-Converter **49** kann verzichtet werden, wenn das mit der Antenenne **43** empfangene elektromagnetische Identifizierungssignal bereits als digitales Signal vorliegt.

Das oben angeführte Verfahren funktioniert allerdings nur, wenn die Person das Personengerät **41** auch trägt und nicht irgendwo herumliegen lässt. Um den Zustand des Tragens bzw. die Tageszeiten des Tragens zu ermitteln, ist im Personengerät **41** ein wenigstens eine Körperfunktion detektierendes Element **57** integriert. Als Körperfunktionen können Hautschweiss, Körpertemperatur, Blutdruck, Puls usw. verwendet werden; es könnte auch ein , Bewegungssensor verwendet werden. Vorzugsweise wird man bei der Ausgestaltung des Personengeräts **41** den Puls messen, da er keine Fehlinterpretation aufgrund von Umgebungseinflüssen zulässt. Die detektierten Körperfunktionen können im Speicher **55** abgespeichert werden. Werden keine Körperfunktionen gemessen, erfolgt zur Energieersparnis eine Abschaltung des Personengeräts **41**.

Dem Zwischenspeicher **50** kann ein Vergleicher **59** nachgeschaltet werden. Der Vergleicher ist mit dem Taktgeber **40**, dem Zeitgenerator **52** und dem Speicher **55** verbunden. Der Vergleicher **59** lässt ein aus dem Zwischenspeicher **50** kommendes Signal nur passieren, wenn es sich vom vorhergehenden unterscheidet. Unterscheiden sich die Signale, so wird das letzte Signal nach Durchlaufen der Komponenten **53** und **54** zusammen mit der Uhrzeit abgespeichert. Dieses Verfahren dient zur Reduzierung der im Speicher **55** gespeicherten Datenmenge.

Neben den mit einer elektromagnetischen Strahlung übermittelten Dateninhalten der Momentansignale können auch, insbesondere akustische, Umgebungsinformationen abgespeichert werden. Hieraus lassen sich dann Rückschlüsse über das Freizeitverhalten schliessen.

An dem vorzugsweise als Armbanduhr ausgebildeten Personengerät 41 können auch Eingabemittel **63** vorgesehen sein. Die Eingabemittel **63** dienen dazu, einen "Dialog" mit der betreffenden Einrichtung zu führen. Es könnte beispielsweise nicht nur von Interesse sein, festzustellen, ob die in der Sendereichweite sich befindende, das Personengerät **41** tragende Person die Einrichtung wahrgenommen hat, sondern auch, wie die Einrichtung auf die Person wirkt (schön, hässlich, unbedeutend, ...). Am Personengerät **41** können dann die hierzu notwendigen Fragen auf der Anzeige **47** dargestellt werden.

Die Eingabemittel könnten jedoch auch dazu verwendet werden, um bei einer Akzeptanzanalyse von Zeitungen, Illustrierten festzustellen, welche Artikel bevorzugt gelesen werden. In diesem Fall werden die Eingabemittel eher einer Tastatur eines Handys mit einer Mehrfachbelegung der Tasten gleichen. Es können dann Artikelkennzeichnung sowie eine Kennzeichnung für das Interesse und eine Beurteilung eingegeben werden. Sofern sich in der Nähe eine Einheit befindet, kann dann auch noch festgestellt werden, wo (zu Hause, in der Eisenbahn, ...) der betreffende Artikel gelesen worden ist.

Auf die oben genannte Tastatur kann auch verzichtet werden. In diesem Fall wird bei einer Akzeptanzermittlung von Lesestoff (Zeitungen, Magazine bzw. deren Artikel) eine Liste im Personengerät abgespeichert. Diese Liste ist dann lediglich durch einen am Personengerät angeordneten Taster abruf-, weiterschalt- bzw. bestätigbar.

Neben einer Tastatur oder auch anstelle dieser kann ein Steckeranschluss vorhanden sein. In diesen Steckeranschluss kann dann ein weiterer Empfänger für elektromagnetische Strahlung angekoppelt werden. Dieser Empfänger kann zur drahtlosen Übertragung weiterer Signale dienen, deren Dateninhalt im Speicher **55** abgespeichert werden. Die Daten können nun direkt oder auch nach der oben geschilderten Komprimierung abgespeichert werden. Die Komprimierung kann im Personengerät oder in einer Zentrale vorgenommen werden.

Es kann aber auch eine sogenannten "Dockingstation" in der Wohnung einer das Personengerät tragenden Person vorhanden sein. Diese "Dockingstation" wird man dann vorzugsweise über das Telefonnetz mit einer Zentrale verbinden. Ist eine dezentrale "Dockingstation" vorhanden, kann auf eine Komprimierung der Daten im Personengerät verzichtet werden, da die Daten nahezu täglich zur "Dockingstation" transferiert werden. Die "Dockingstation" kann dann falls notwendig eine Komprimierung vornehmen.

Man kann nun beispielsweise einen Barcodeleser verwenden, mit dem Daten abgenommen werden, die dann drahtlos übermittelt werden. Man kann hiermit auch die Hörgewohnheiten von Personen aufnehmen, welche mit Kopfhörern hören und somit mit den üblichen akustischen Senderhöraufzeichnungen nicht ausgewertet werden können. Es wird an die Kopfhörerbuchse ein kleines Sendegerät angeschlossen, an das wiederum das Kopfhörerkabel angeschlossen wird. Der Sender dieses Sendegeräts hat eine sehr kurzer Reichweite. Er muss lediglich eine Sendeverbindung bis zum Personengerät ("Armbanduhr") aufrecht erhalten.

Über die Eingabemittel kann auch ein Aufladen von Akkumulatoren im Personengerät vorgenommen und der korrekte Gang eines Zeitgebers überprüft werden.

Anstatt das Personengerät als Armbanduhr auszubilden, kann es auch als Schmuckstück, wie beispielsweise eine Brosche ausgebildet sind. Man kann es auch in der Art eine Ohrstöpsels ausbilden. Sollen mit dem Personengerät zusätzlich die Akzeptanz von Sendungen des Hör- und Fernsehfunks alleine oder zusammen mit den Identifizierungssignalen der Einrichtungen aufgezeichnet werden, so kann ein zusätzliches Mikrofon verwendet werden, dessen Datenkompression anlog zu derjenigen des elektromagnetischen Signals vorgenommen wird. Um das Hörverhalten bei mit Kopfhörern gehörten Sendung zu erhalten, könnte in das Kopfhörerkabel ein Sender für eine entsprechende elektromagnetische Strahlung eingesetzt werden.

Als elektromagnetische Strahlung wird man Höchstfrequenzstrahlung in Giga- bzw. Subgigahertzbereich verwenden; es kann aber auch eine optische Strahlung im sichtbaren bzw. angrenzenden nicht sichtbaren Bereich verwendet werden.

Jede Einrichtung hat wenigstens einen Einrichtungssender. Es können mehrere Einrichtungssender vorhanden sein, um z. B. den Sendebereich räumlich auszuweiten. Es können aber auch mehrere Sender vorhanden sein, welche unterschiedliche Identifizierungssignale aussenden. Dies kann von Vorteil sein, wenn Personengeräte ausgegebene werden, welche für unterschiedliche Personengruppen spezifiziert sind.

Jeder Einrichtungssender hat einen Höchstfrequenteil zum Aussenden der Trägerfrequenz (Gigahertz, optisch) und einen Niederfrequenzteil für das auf die Trägerfrequenz aufzuprägende Identifizierungssignal. Das Identifizierungssignal kann nun eine zwar programmierbare , aber über einen längeren Zeitraum feste Datenfolge sein; es kann aber auch eine sich kontinuierlich ändernde Datenfolge sein.

## Patentansprüche

1. Verfahren zur Ermittlung einer zeitlichen Akzeptanz von Einrichtungen **(1a-c)**, **dadurch gekennzeichnet, dass** von jeder Einrichtung **(1a-c)** ein elektromagnetisches Identifizierungssignal **(5a-c)** mit einer vorgegebenen Reichweite **(17a-c)** ausgesandt wird, dessen momentaner Dateninhalt von einem von einer Person (**6a-d**; **24**) getragenen Personengerät (**7a-d; 41**) empfangen wird, sofern sich die Person (**6a-d; 24**) innerhalb eines durch die jeweilige Reichweite (**17a-c**) definierten Sendebereichs (**16**) befindet, und der Dateninhalt in einem Gerätespeicher (**55**) des Personengeräts (**7a-d; 41**) abgespeichert wird, wobei der Sendebereich (**16**) und eine Empfangsempfindlichkeit des Personengeräts (**7a-d; 41**) derart aufeinander abgestimmt sind, dass kein Datenempfang möglich ist, sofern sich die Einrichtung **(1a-c)** bezogen auf das von der Person **(6a-d; 24)** getragene Personengerät **(7a-d; 41)** ausserhalb eines typischen menschlichen Aufmerksamkeits- bzw. Empfindungsbereichs (**25**) befindet.

2. Verfahren nach Anspruch 1, **dadurch gekennzeichnet, dass** in den Gerätespeicher (**55**) durch Eingabemittel (**63**) am Personengerät (**41**) weitere Informationen eingespeichert werden, wobei das Einspeichern vorzugsweise gemäss einem empfangenen Dateninhalt eines Identifizierungssignals einer Einrichtung, insbesondere als Frage-/Antwortinformation, erfolgt.

3. Verfahren nach Anspruch 1 oder 2, **dadurch gekennzeichnet, dass** das Personengerät ein elektromagnetisches Initiierungssignal mit einer dem typischen menschlichen Aufmerksamkeits- bzw. Empfindungsbereich **(25)** entsprechenden Reichweite in vorgegebenen Zeitschritten aussendet und vorzugsweise die Einrichtung (**1a.c**) oder das Personengerät, insbesondere zur Energieersparnis, durch ein Initierungssignal zum Aussenden des Identifizierungssignals bzw. zu dessen Empfang initiiert wird.

4. Verfahren nach einem der Ansprüche 1 bis 3, **dadurch gekennzeichnet, dass** die im Gerätespeicher (**55**) abzuspeichernden Daten zusammen mit einer Zeitinformation (Tageszeit und/oder Datum) abgespeichert werden und die Zeitinformation repetitiv im Minuten- bzw. Subminutenbereich mit einer Signaldauer im Sekunden- bzw. Subsekundenbereich erfolgt.

5. Verfahren nach einem der Ansprüche 1 bis 4, **dadurch gekennzeichnet, dass** die Signale mehrerer Einrichtungen **(1a-c)** aus einem räumlichen Überwachungsbereich während des Zeitraums in einer Zentrale **(27)** als Zeitraumeinrichtungssignal abgespeichert, in jedem Gerätespeicher (**55**) über den Zeitraum gespeicherte Dateninhalte der Momentansignale später zur Zentrale (**27**) übertragen und zur Koinzidenzbildung mit den dort gespeicherten Zeitraumsignalen ausgelesen sowie die ermittelten Koinzidenzen verarbeitet werden.

6. Verfahren nach einem der Ansprüche 1 bis 5, **dadurch gekennzeichnet, dass** neben den mit einer elektromagnetischen Strahlung übermittelten Dateninhalten der Momentansignale auch, insbesondere akustische, Umgebungsinformationen, vorzugsweise drahtlos übertragene Senderinformationen, abgespeichert werden.

7. Anordnung zur Durchführung des Verfahrens nach einem der Ansprüche 1 bis 6 zur Ermittlung einer zeitlichen Akzeptanz von örtlich voneinander distanzierten Einrichtungen **(1a-c)**, **gekennzeichnet durch** wenigstens eine an jeder Einrichtung **(1a-c)** angeordnete Sendereinheit **(3a-c; 15**), von der ein elektromagnetisches, diese Einrichtung **(1a-c)** identifizierendes Identifizierungssignal **(5a-c)** mit einer vorgegebenen Reichweite **(17a-c)** aussendbar ist, und mehreren von jeweils einer Person (**6a-c; 24**) zu tragenden Personengeräten (**7a-d; 41**) mit einem Empfänger **(4a-d; 44)** für die Signale und mit einem Gerätespeicher **(55),** um über einen vorgegebenen Zeitraum Dateninhalte der abgestrahlten Signale **(5a-c)** abzuspeichern, wobei die Reichweite **(17a-c)** jeder Sendeeinheit **(3a-c; 15)** einen jeweiligen Sendebereich (**9a-c; 16**) definiert, und der Sendebereich (**9a-c; 16**) und eine Empfangsempfindlichkeit des Empfängers **(4a-d; 19a,b; 44)** derart aufeinander abgestimmt sind, dass kein Datenempfang möglich ist, sofern sich die Einrichtung **(1a-c)** bezogen auf das von der Person **(6a-c; 24)** getragene Personengerät **(7a-d; 41)** ausserhalb eines typischen menschlichen Aufmerksamkeits- bzw. Empfindungsbereichs (**25**) befindet.

8. Anordnung nach Anspruch 7, **dadurch gekennzeichnet, dass** jedes Personengerät (**41**) einen Zeitgeber (**40**) hat, um die Datenmenge im Gerätespeicher (**55**) zu reduzieren und/oder eine zeitliche Zuordnung vorzunehmen, und/oder zu ermitteln, wie oft und/oder wie lange eine das Personengerät **(7a-d; 41)** tragende Person **(6a-d; 24)** sich innerhalb des betreffenden Sendebereichs **(16)** einer Einrichtung **(1a-c)** aufgehalten hat, und vorzugsweise eine Zentrale **(27)** vorhanden ist, mit der die Daten jedes Gerätespeichers (**55**) auslesbar und verarbeitbar sind.

9. Anordnung nach Anspruch 8, **dadurch gekennzeichnet, dass** der Zeitgeber (**40**) in seiner Taktfolge durch ein Einrichtungssignal zeitlich umschaltbar ausgebildet ist, um eine Einstellung auf typische Verweildauern der das Personengerät (**7a-d; 41**) tragenden Person **(6a-d; 24)** im Sendebereich **(16)** einer jeweiligen Einrichtung **(1a-c)** einzustellen.

10. Personengerät **(1a-c; 41)** der Anordnung nach einem der Ansprüche 7 bis 9, **gekennzeichnet durch** ein Armbanduhrgehäuse, zur Aufnahme wesentlicher elektronischer Elemente, wenigstens einen Empfänger (**44**) für eine elektromagnetische Strahlung (**5a-c**), einen Gerätespeicher (**55**) zum Abspeichern der mit jedem Empfänger (**44**) empfangbaren Datensätze sowie eine Schnittstelle (**38**) zum Auslesen der abgespeicherten Datensätze.

11. Personengerät **(1a-c; 41)** nach Anspruch 10, **gekennzeichnet durch** eine synchronisierbare Zeitgebereinheit **(52),** mit der in Zusammenarbeit mit dem Gerätespeicher (**55**) empfangene Datensätze zeitsynchron abspeicherbar sind, und insbesondere eine Zeitanzeige **(45),** welche mit der Zeitgebereinheit **(52)** verbunden ist, wobei insbesondere das Personengerät **(1a-c; 41)** das Aussehen einer Armbanduhr hat.

12. Personengerät nach Anspruch 10 oder 11, **gekennzeichnet durch** einen Tragsensor zur Ermittlung der Zeiten, zu denen das Personengerät nicht von der Person getragen wird.

13. Personengerät nach einem der Ansprüche 10 bis 12, **gekennzeichnet durch** Eingabemittel für weitere Informationen parallel und/oder ergänzend zu wenigstens einem der Identifizierungssignalen und vorzugsweise ein Anzeigemittel, auf dem Anweisungen für die das Personengerät tragende Person darstellbar sind.

14. Sendereinheit (**3a-c; 15**) der Anordnung nach einem der Ansprüche 7 bis 9, **gekennzeichnet durch** einen Sender für elektromagnetische Strahlung vorgegebener Reichweite (**17a-c**), wobei die Reichweite (**17a-c**) derart eingestellt ist, dass ein Empfang nur im menschlichen Aufmerksamkeits- bzw. Empfindungsbereich (**16**) möglich ist, und einem mit der Sendereinheit verbundenen programmierbaren Speicher, dessen Dateninhalt einrichtungsspezifisch ist.
